# EUROPÄISCHE PATENTSCHRIFT

(11) **EP 1 062 069 B1**
(45) Veröffentlichungstag und Bekanntmachung des Hinweises auf die Patenterteilung: **19.06.2002**
(21) Anmeldenummer: 99908654.9
(22) Anmeldetag: 05.03.1999
(51) Int. Cl.: B23K 9/067

(54) **VERFAHREN ZUM ZÜNDEN EINES LICHTBOGENS ZWISCHEN EINEM WERKSTÜCK UND EINER ABZUSCHMELZENDEN ELEKTRODE SOWIE EINRICHTUNG ZUR DURCHFÜHRUNG DES VERFAHRENS**
METHOD FOR IGNITING AN ELECTRIC ARC BETWEEN A WORKPIECE AND A FUSIBLE ELECTRODE AND DEVICE FOR THE IMPLEMENTATION THEREOF
PROCEDE POUR AMORCER UN ARC ENTRE UNE PIECE ET UNE ELECTRODE FUSIBLE ET DISPOSITIF PERMETTANT DE METTRE LEDIT PROCEDE EN OEUVRE

(30) Priorität: 10.03.1998 AT 41098
(43) Veröffentlichungstag der Anmeldung: 27.12.2000
(73) Patentinhaber: FRONIUS Schweissmaschinen Produktion GmbH & Co. KG, 4643 Pettenbach (AT)
(72) Erfinder: ARTELSMAIR, Josef, A-4552 Wartberg/Krems (AT)
(74) Vertreter: Secklehner, Günter, Dr.
(86) Internationale Anmeldenummer: AT9900054
(87) Internationale Veröffentlichungsnummer: WO9946078

(56) Entgegenhaltungen:
- EP-A- 0 178 680
- DE-A- 3 932 210
- FR-A- 2 666 261

## Beschreibung

Die Erfindung betrifft ein Verfahren zum Zünden eines Lichtbogens zwischen einem Werkstück und einer abzuschmelzenden Elektrode sowie eine Einrichtung zur Durchführung des Verfahrens, wie diese in den Oberbegriffen der Ansprüche 1 und 12 beschrieben sind (siehe DE 40 32 618 A1).

Aus der DE 40 32 618 A1 ist ein Verfahren zum Zünden eines Lichtbogens nach dem Lift-Arc Prinzip bekannt, bei dem zum Zünden des Lichtbogens zwei Energiequellen parallel geschaltet sind. Dabei wird der Schweißdraht von einem Drahtvorschubgerät bis zum Berühren an das Werkstück zubewegt, wodurch ein Kurzschluß geschaffen wird. Anschließend wird der Schweißdraht durch die zusätzliche Energiequelle mit einer geringen Stromstärke vom Werkstück abgehoben bzw. zurückgezogen, sodaß aufgrund der Aufhebung des Kurzschlusses eine Zündung des Lichtbogens erfolgt. Die Höhe des Stromes ist dabei so definiert, daß ein Abschmelzen des Materials vom Schweißdraht verhindert wird. Nach Ablauf einer voreinstellbaren Zeitdauer bzw. nach dem Zünden des Lichtbogens wird der Schweißdraht wiederum in Richtung des Werkstückes bewegt, wobei nunmehr die Versorgung des Lichtbogens mit einem hohen Strom über die primäre Energiequelle erfolgt, sodaß ein Abschmelzen des Schweißdrahtes gewährleistet ist. Nachteilig ist hierbei, daß aufgrund der Zündung des Lichtbogens über eine Hilfsstromquelle mit geringem Strom beim Abheben des Schweißdrahtes nur eine geringe Lichtbogenlänge erzielt werden kann, wodurch es durch Aufschmelzen des Schweißdrahtes zu einem weiteren Kurzschluß kommen kann, da das aufgeschmolzene Material beim Übergang vom Schweißdraht zum Werkstück in das Schmelzbad gesaugt wird, und somit aufgrund der geringen Lichtbogenlänge es zu einem weiteren Kurzschluß führen kann.

Weiters ist aus der DE 37 31 180 C2 ein Verfahren zum Zünden eines Lichtbogens bekannt, bei dem die Versorgung des Lichtbogens bzw. die Zündung des Lichtbogens über eine geregelte Energiequelle erfolgt. Hierzu wird der Schweißdraht in Richtung des Werkstückes bewegt, sodaß ein Kurzschluß zwischen dem Schweißdraht und dem Werkstück entsteht, wobei gleichzeitig der Schweißdraht von der Energiequelle mit einem geringen Strom versorgt wird, sodaß bei der Bildung des Kurzschlusses der Lichtbogen durch Abschmelzen des Schweißdrahtes mit einer geringen Lichtbogenlänge gezündet wird. Diese Energie bzw. die Höhe des Stromes zum Zünden des Lichtbogens ist derartig ausgelegt, daß ein Aufschmelzen bzw. Abschmelzen des Schweißdrahtes erfolgt. Anschließend wird mit wachsender Lichtbogenlänge der Energiebedarf bzw. der Strom am Schweißdraht erhöht, sodaß nach Erreichen einer einstellbaren Schwelle ein definierter Energieimpuls bzw. Stromimpuls ausgesendet wird, und somit ein Ablösen des Tropfens am Schweißdrahtende erzielt wird. Nachteilig ist hierbei, daß es bei einem derartigen Verfahren zur Bildung eines satten Kurzschlusses kommen kann, d.h., daß bei Erlöschen des Lichtbogens das aufgeschmolzene Material mit dem Werkstück verklebt, sodaß dieser satte Kurzschluß nur mehr mit einem extrem hohen Stromimpuls über eine gewisse Zeitdauer behoben werden kann, wodurch Schweißspritzer und Einbrände neben der Schweißstelle entstehen.

Der vorliegenden Erfindung liegt die Aufgabe zugrunde, ein Verfahren zum Zünden eines Lichtbogens zwischen einem Werkstück und einer abzuschmelzenden Elektrode, insbesondere einem Schweißdraht, zu schaffen, bei der eine sichere und stabile Zündung des Lichtbogens erreicht wird.

Diese Aufgabe der Erfindung wird durch die Merkmale des Anspruches 1 gelöst. Vorteilhaft ist hierbei, daß das Anlegen einer hohen Leerlaufspannung erst zum Zeitpunkt des Zündens des Lichtbogens erfolgt und somit ein Anliegen der hohen Leerlaufspannung an den Schweißbuchsen vermieden wird. Über den elektronischen Schalter, der in Serie zur Konstant-Spannungsquelle liegt, wird diese zum Zeitpunkt der Drahtberührung mit dem Werkstück sehr schnell, beispielsweise innerhalb 1 µs, zugeschaltet. Die hohe Leerlaufspannung bewirkt einen sehr steilen Stromanstieg beim Berühren des Schweißdrahtes mit dem Werkstück, wodurch ein satter Kurzschluß verhindert wird. Ein weiterer Vorteil liegt darin, daß, nachdem der Lichtbogen gezündet wurde, die Versorgung bzw. Stabilisierung des Lichtbogens über die primäre Energiequelle erfolgt, sodaß erst nach Erreichen einer bestimmten, voreinstellbaren Lichtbogenlänge der tatsächliche Schweißprozeß durchgeführt wird.

Weitere vorteilhafte Maßnahmen sind in den Ansprüchen 2 bis 11 beschrieben. Die damit erzielbaren Vorteile sind der detaillierten Figurenbeschreibung zu entnehmen.

Die Einrichtung zur Durchführung des Verfahrens nach einem der vorhergehenden Ansprüche 1 bis 11 ist durch die Merkmale des Anspruches 12 beschrieben. Vorteilhaft ist hierbei, daß mit der einfach aufgebauten Einrichtung erreicht wird, daß an den Schweißbuchsen nicht die hohe Leerlaufspannung anliegt. Darüber hinaus ist der Vorteil gegeben, daß durch den einfachen Aufbau dieser Einrichtung eine große Wirtschaftlichkeit erzielt wird.

Weitere vorteilhafte Maßnahmen sind in den Ansprüchen 13 bis 20 beschrieben. Die damit erzielbaren Vorteile sind der detaillierten Figurenbeschreibung zu entnehmen.

Die Erfindung wird im nachfolgenden anhand der in den Zeichnungen dargestellten Ausführungsbeispiele näher erläutert.

Es zeigen:
- Fig. 1: eine schematische Darstellung eines Schweißgerätes mit den einzelnen Komponenten in vereinfachter, schematischer Darstellung;
- Fig. 2: ein Blockschaltbild der Schweißstromquelle mit der Konstant-Stromquelle und der erfindungsgemäß parallel geschalteten Konstant-Spannungsquelle in vereinfachter und schematischer Darstellung;
- Fig. 3: einen Vorschubgeschwindigkeitsverlauf für ein Drahtvorschubgerät in vereinfachter und schematischer Darstellung für das Ausführungsbeispiel nach Fig. 2;
- Fig. 4: einen Spannungsverlauf am Schweißdraht in vereinfachter, schematischer Darstellung für das Ausführungsbeispiel nach Fig. 2;
- Fig. 5: einen Stromverlauf am Schweißdraht in vereinfachter, schematischer Darstellung für das Ausführungsbeispiel nach Fig. 2;
- Fig. 6: ein Blockschaltbild eines weiteren Ausführungsbeispiels der Schweißstromquelle gemäß Fig. 2 zur Erzielung des erfindungsgemäßen Verfahrensablaufes gemäß den Fig. 3 bis 5.

Einführend sei festgehalten, daß in den unterschiedlich beschriebenen Ausführungsformen gleiche Teile bzw. Zustände mit gleichen Bezugszeichen bzw. gleichen Bauteilbezeichnungen versehen werden, wobei die in der gesamten Beschreibung enthaltenen Offenbarungen sinngemäß auf gleiche Teile bzw. Zustände mit gleichen Bezugszeichen bzw. gleichen Bauteilbezeichnungen übertragen werden können. Weiters können auch Einzelmerkmale aus den gezeigten unterschiedlichen Ausführungsbeispielen für sich eigenständige, erfindungsgemäße Lösungen darstellen.

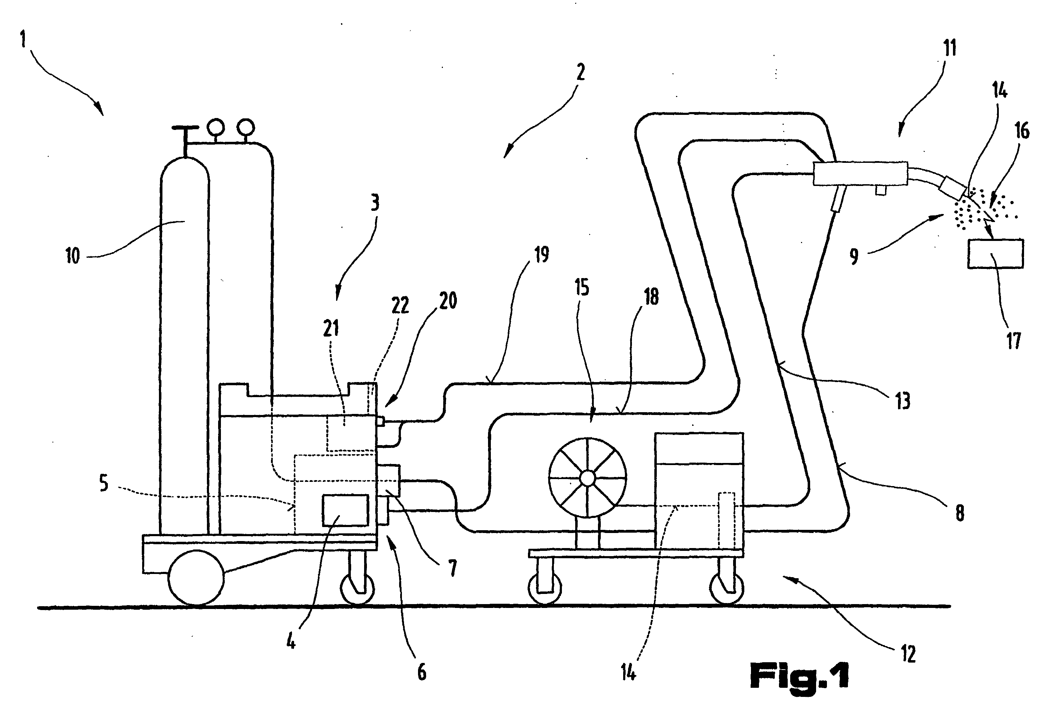

In Fig. 1 ist ein Schweißgerät 1, insbesondere eine Schweißstromquelle 2, für verschiedenste Schweißverfahren, wie z.B. zum MIG-/MAG-Schweißen bzw. TIG-Schweißen, gezeigt. Das Schweißgerät 1, insbesondere die Schweißstromquelle 2, umfaßt eine Konstant-Stromquelle 3 mit einem Leistungsteil 4, eine Steuervorrichtung 5 und ein dem Leistungsteil 4 bzw. der Steuervorrichtung 5 zugeordnetes Umschaltglied 6. Das Umschaltglied 6 bzw. die Steuervorrichtung 5 ist mit einem Steuerventil 7 verbunden, welches in einer Versorgungsleitung 8 für ein Gas 9, insbesondere ein Schutzgas, wie beispielsweise Stickstoff, Helium oder Argon und dergleichen, zwischen einem Gasspeicher 10 und einem Schweißbrenner 11 angeordnet ist.

Zudem wird über die Steuervorrichtung 5 auch noch ein Drahtvorschubgerät 12 angesteuert, wobei über eine Versorgungsleitung 13 ein Schweißdraht 14 von einer Vorratstrommel 15 in den Bereich des Schweißbrenners 11 zugeführt wird. Die Energie zum Aufbau eines Lichtbogens 16 zwischen dem Schweißdraht 14 und einem Werkstück 17 wird über eine Versorgungsleitung 18 vom Leistungsteil 4 der Konstant-Stromquelle 3 dem Schweißbrenner 11 bzw. dem Schweißdraht 14 zugeführt.

Zum Kühlen des Schweißbrenners 11 wird über einen Kühlkreislauf 19 der Schweißbrenner 11 unter Zwischenschaltung eines Strömungswächters 20 mit einem Wasserbehälter 21 verbunden, sodaß bei der Inbetriebnahme des Schweißbrenners 11 der Kühlkreislauf 19 von der Steuervorrichtung 5 gestartet werden kann, wodurch eine Kühlung des Schweißbrenners 11 erreicht wird.

Weiters weist das Schweißgerät 1 eine Ein- und/oder Ausgabevorrichtung 22, wie z.B. Bedienelemente, eine Tastatur und/oder ein Display auf, durch die die unterschiedlichsten Schweißparameter bzw. Betriebsarten des Schweißgerätes 1 eingestellt werden können. Dabei werden die über die Ein- und/oder Ausgabevorrichtung 22 eingestellten bzw. ausgewählten Werte an die Steuervorrichtung 5 weitergeleitet, sodaß anschliessend von der Steuervorrichtung 5 die einzelnen Komponenten entsprechend den vorgegebenen Werten bzw. den aus diesen Werten ermittelten Steuerfunktionen aktiviert werden können.

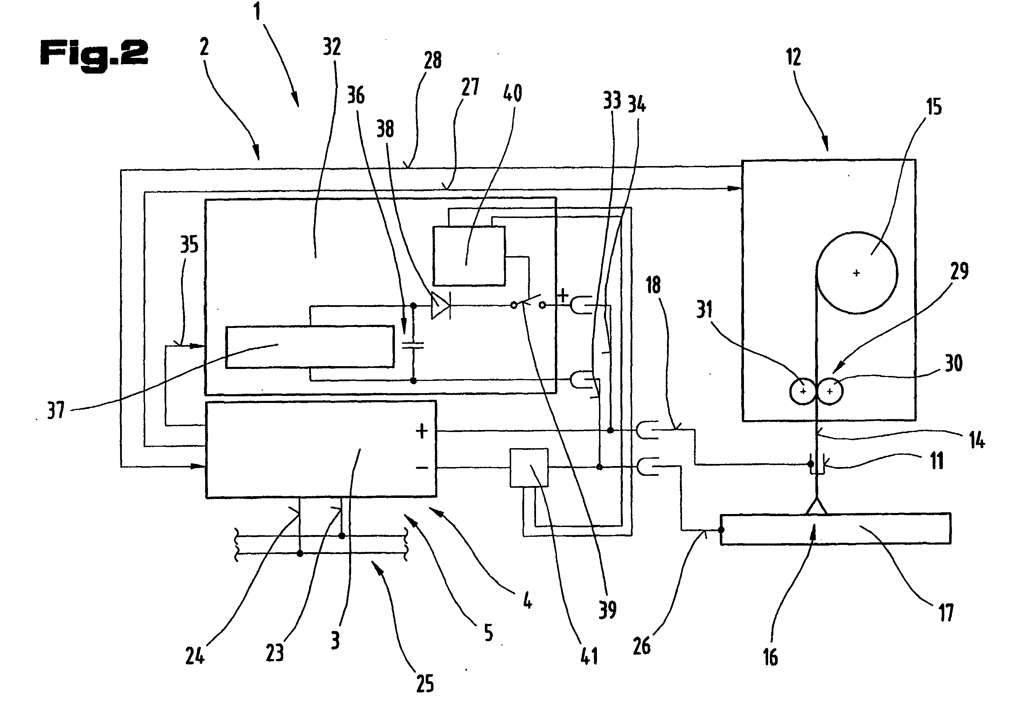

In den Fig. 2 bis 5 ist ein Verfahrensablauf zum Zünden des Lichtbogens 16 zwischen dem Werkstück 17 und einer abzuschmelzenden Elektrode, insbesondere dem Schweißdraht 14, gezeigt, wobei in Fig. 2 ein vereinfachtes Blockschaltbild der Schweißstromquelle 2, insbesondere des Schweißgerätes 1, dargestellt ist. Bei diesem Blockschaltbild sind in der Konstant-Stromquelle 3 die Komponenten des Leistungsteil 4 und der Steuervorrichtung 5, wie sie in Fig. 1 beschrieben sind, integriert.

Bei dem dargestellten Blockschaltbild sind die weiteren in Fig. 1 beschriebenen Komponenten mit der Konstant-Stromquelle 3 leitungsverbunden, sodaß eine Aktivierung, beispielsweise der Kühlung, durch die Konstant-Stromquelle 3, insbesondere der Steuervorrichtung 5, möglich ist. In Fig. 2 sind nur die für das Zünden des Lichtbogens 16 notwendigen Komponenten dargestellt. Dazu ist die Konstant-Stromquelle 3 über Versorgungsleitungen 23, 24 mit einem Spannungsversorgungsnetz 25 verbunden, sodaß die einzelnen Komponenten des Schweißgeräts 1 mit Strom und Spannung versorgt werden können.

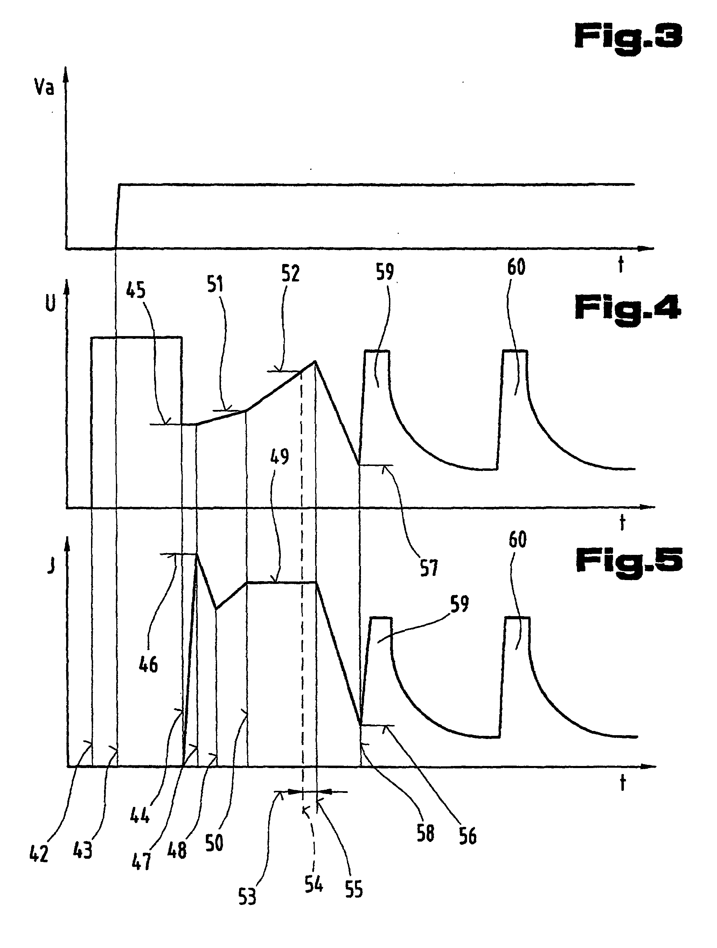

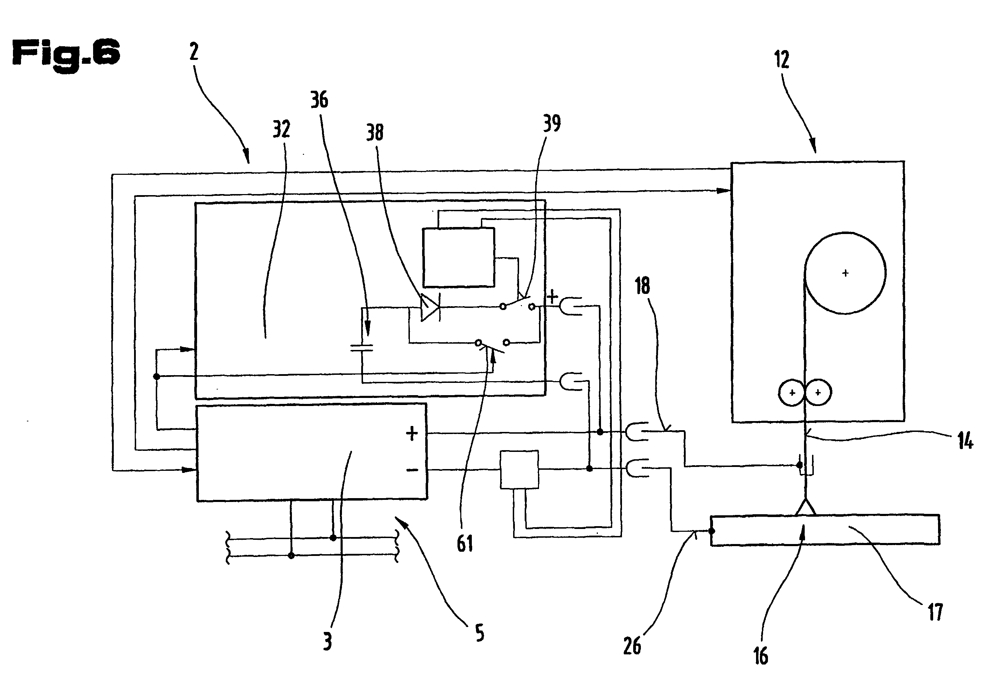

In den Fig. 3 bis 5 sind in Form von Diagrammen Verfahrensabläufe dargestellt, wobei in den Fig. 4 und 5 auf der Ordinate die Spannung U bzw. der Strom I sowie auf der Abszisse die Zeit t aufgetragen sind.

Bei dem dargestellten Blockschaltbild in Fig. 2 ist die Konstant-Stromquelle 3 über die Versorgungsleitung 18 mit dem schematisch dargestellten Schweißbrenner 11 verbunden, wogegen das Werkstück 17 über eine weitere Versorgungsleitung 26 mit der Konstant-Stromquelle 3 verbunden ist. Bei dem dargestellten Ausführungsbeispiel wird der Schweißbrenner 11 über die Versorgungsleitung 18 mit dem positiven Potential versorgt, wogegen das negative Potential über die Versorgungsleitung 26 am Werkstück 17 angelegt ist. Gleichzeitig weist die Konstant-Stromquelle 3 Steuerleitungen 27, 28 auf, die mit dem Drahtvorschubgerät 12 verbunden sind. Bei dem Drahtvorschubgerät 12 sind die Vorratstrommel 15 sowie eine Fördervorrichtung 29 zum Befördern des Schweißdrahtes 14 an den Schweißbrenner 11 dargestellt. Die Fördervorrichtung 29 kann aus zwei Förderrollen 30, 31 gebildet werden, wobei zumindest eine der beiden Förderrollen 30, 31 über einen nicht dargestellten Motor angetrieben wird.

Weiters ist in Fig. 2 eine zusätzliche Konstant-Spannungsquelle 32 parallel zur Konstant-Stromquelle 3 geschaltet, d.h., daß die Ausgänge der Konstant-Spannungsquelle 32 über Leitungen 33, 34 mit den Versorgungsleitungen 18, 26 bzw. den Ausgängen der Konstant-Stromquelle 3 verbunden sind. Dabei ist das positive Potential der Konstant-Spannungsquelle 32 wiederum mit dem positiven Potential der Konstant-Stromquelle 3 zusammengeschaltet. Damit die Konstant-Spannungsquelle 32 von der Steuervorrichtung 5 angesteuert werden kann, ist eine Steuerleitung 35 zwischen der Steuervorrichtung 5, insbesondere der Konstant-Stromquelle 3 und der Konstant-Spannungsquelle 32 dargestellt.

Die Konstant-Spannungsquelle 32 ist derartig ausgebildet, daß sie den Schweißbrenner 11 mit einer sehr hohen Leerlaufspannung, beispielsweise zwischen 200 V und 500 V, versorgt. Die Konstant-Stromquelle 3 versorgt den Schweißbrenner 11 mit dem Schweißstrom, der beispielsweise zwischen 20 A und 500 A liegen kann. Es kann nunmehr gesagt werden, daß die zusätzlich angeordnete und parallel geschaltete Konstant-Spannungsquelle 32 für das Zünden des Lichtbogens 16 verwendet wird, wobei bei einem Schweißprozeß nach dem Zünden des Lichtbogens 16 die Konstant-Spannungsquelle 32 deaktiviert ist und der Schweißprozeß von der Konstant-Stromquelle 3 mit Energie versorgt wird.

Zur Zündung des Lichtbogens 16 wird die Energie der Konstant-Spannungsquelle 32 der Energie der Konstant-Stromquelle 3 überlagert. Die Energie der Konstant-Spannungsquelle 32 wird in Abhängigkeit eines voreinstellbaren Stromwertes und/oder Stromanstieges der Konstant-Stromquelle 3 zugeschaltet. Die Konstant-Spannungsquelle 32 besteht aus einem Energiespeicher, insbesondere einem Kondensator 36, der über eine Aufladevorrichtung 37 auf einen voreinstellbaren Spannungswert aufladbar ist. In Serie zum Kondensator 36 ist eine Diode 38 sowie ein elektronischer Schalter 39 geschaltet. Die Serienschaltung des Kondensators 36 mit der Diode 38 ist dabei derart mit dem Ausgang der Konstant-Stromquelle 3 bzw. mit den Versorgungsleitungen 18, 26 verbunden, daß die Kathode der Diode 38 mit dem positiven Potential, demgemäß mit der Versorgungsleitung 18, verbunden ist und der verbleibende Anschluß des Kondensators 36 mit dem negativen Potential, beispielsgemäß mit der Versorgungsleitung 26, verbunden ist.

Der elektronische Schalter 39 ist über eine Steuereinrichtung 40 ansteuerbar, wobei die Steuereinrichtung 40 über einen Signalgeber, beispielsweise einen Stromwandler 41, aktivierbar ist. Der Stromwandler 41 ist im Stromkreis der Konstant-Stromquelle 3 zum Schweißbrenner 11 bzw. zum Werkstück 17 angeordnet. Zum Zünden des Lichtbogens 16 berührt der Schweißbrenner 11 bzw. der Schweißdraht 14 das Werkstück 17, wodurch der Stromkreis geschlossen wird und ein Strom von der Konstant-Stromquelle 3 über die Versorgungsleitungen 18, 26 fließt. Der Stromwandler 41 reagiert auf diesen Strom bzw. auf diesen Stromanstieg und aktiviert die Steuereinrichtung 40, die wiederum den elektronischen Schalter 39 schließt und die Energie der Konstant-Spannungsquelle 32 der Energie der Konstant-Stromquelle 3 überlagert, und somit steht zum Zünden des Lichtbogens 16 eine hohe Leerlaufspannung zur Verfügung.

Bei den Diagrammen, wie sie in den Fig. 3 bis 5 dargestellt sind, ist ein Kurvenverlauf für die Drahtvorschubgeschwindigkeit des Drahtvorschubgerätes 12 - Fig. 3 - und ein Spannungsverlauf - Fig. 4 - sowie Stromverlauf - Fig. 5 - an der abzuschmelzenden Elektrode, insbesondere am Schweißdraht 14 dargestellt.

Möchte nunmehr ein Benutzer einen Schweißprozeß durchführen, so muß zuerst der Lichtbogen 16 gezündet werden. Dazu aktiviert der Benutzer das Schweißgerät 1, sodaß alle Komponenten des Schweißgerätes 1, wie sie in Fig. 1 beschrieben sind, mit Strom und Spannung versorgt werden. Nachdem der Benutzer über die Ein- und/oder Ausgabevorrichtung 22 alle Einstellungen für einen Schweißprozeß vorgenommen hat, kann der Benutzer beispielsweise durch Aktivieren eines Tasters, der beispielsweise am Schweißbrenner 11 angeordnet ist, den Schweißprozeß starten.

Nach dem Starten des Schweißprozesses wird von der Steuervorrichtung 5 die Konstant-Stromquelle 3, insbesondere das Leistungsteil 4 und die Aufladevorrichtung 37, für die Konstant-Spannungsquelle 32 aktiviert, d.h., daß die Konstant-Stromquelle 3 vorerst den Schweißbrenner 11 mit Energie versorgt. Am Schweißbrenner 11 wird die Energie an den Schweißdraht 14 übergeben. Das Starten des Schweißprozesses ist aus den Diagrammen der Fig. 3 bis 5 zu einem Zeitpunkt 42 dargestellt. Wie nun aus den beiden Kurvenverläufen der Fig. 4 und 5 zu ersehen ist, wird der Schweißdraht 14 von der Konstant-Stromquelle 3 mit der Leerlaufspannung versorgt.

Nachdem die Konstant-Stromquelle 3 aktiviert wurde, wird zu einem weiteren Zeitpunkt 43 von der Steuervorrichtung 5 das Drahtvorschubgerät 12 aktiviert, sodaß der Schweißdraht 14 von der Vorratstrommel 15 über die Fördervorrichtung 29 in Richtung des Schweißbrenners 11 und somit zum Werkstück 17 bewegt wird. Selbstverständlich ist es möglich, daß das Aktivieren des Drahtvorschubgerätes 12 gleichzeitig mit dem Aktivieren der Konstant-Stromquelle 3 erfolgen kann.

Zu einem Zeitpunkt 44 berührt nunmehr der Schweißdraht 14 das Werkstück 17, wodurch ein Kurzschluß zwischen dem positiven Potential und dem negativen Potential über den Schweißdraht 14 geschaffen wird. In den Versorgungsleitungen 18, 26 fließt ein Strom, worauf der Stromwandler 41 die Steuereinrichtung 40 aktiviert, die wiederum den elektronischen Schalter 39 schließt. Aufgrund des Kurzschlusses sinkt die Spannung der Konstant-Stromquelle 3 auf einen Wert 45 ab, wobei gleichzeitig mit dem Kurzschluß und dem Absinken der Spannung ein sehr schneller Stromanstieg von der Konstant-Spannungsquelle 32 geschaffen wird. Dazu ist zu erwähnen, daß durch die hohe Leerlaufspannung der Konstant-Spannungsquelle 32 ein sehr steiler Stromanstieg geschaffen wird, d.h., daß beispielsweise der Stromanstieg zwischen 1500 A/ms und 20000 A/ms betragen kann. Aufgrund des schnellen und starken Stromanstieges bildet sich im Bereich des Kurzschlusses zwischen dem Schweißdraht 14 und dem Werkstück 17 eine Lichtbogensäule bzw. der Lichtbogen 16 aus, wobei diese Lichtbogensäule, insbesondere der Lichtbogen 16, eine hohe Stromdichte und einen hohen Druck zwischen dem Schweißdrahtende und dem Werkstück 17 bewirkt.

Durch den steilen Stromanstieg im Moment der Berührung des Schweißdrahtes 14 mit dem Werkstück 17 kommt es zu einer hohen Energiedichte am Schweißdrahtende, wodurch sich eine kurze Plasmasäule mit hohem Druck unter dem angeschmolzenen Material des Schweißdrahtes 14 ausbildet. Durch das Aufschmelzen des Materials des Schweißdrahtes 14 bildet sich ein flüssiger Metalltropfen am Ende des Schweißdrahtes 14, der aufgrund der Plasmasäule leicht vom Schweißdrahtende weggedrückt werden kann. Vorteilhaft ist hierbei, daß aufgrund der hohen Energiedichte, die durch den steilen Stromanstieg erreicht wird, das Schweißdrahtende sehr schnell angeschmolzen bzw. verflüssigt wird, wobei gleichzeitig das Werkstück 17 im Bereich des sich ausbildenden Lichtbogens 16 erwärmt wird. Diese Erwärmung des Werkstückes 17 und das Anschmelzen bzw. Verflüssigen des Materials des Schweißdrahtes 14 verhindert nunmehr einen vollflächigen Kontakt des Schweißdrahtendes mit dem Werkstück 17, sodaß ein satter Kurzschluß, der nur durch einen sehr hohen Stromimpuls über eine gewisse Zeitdauer gelöst werden kann, verhindert wird und gleichzeitig eine sichere Zündung des Lichtbogens 16 gewährleistet ist.

Nach Ablauf einer gewissen Zeitdauer erreicht der Stromanstieg der Konstant-Spannungsquelle 32 einen Maximalwert 46. Dies ist in Fig. 5 zu einem Zeitpunkt 47 ersichtlich. Nachdem der Strom seinen Maximalwert 46 erreicht hat, beginnt dieser wiederum zu sinken, wobei das Absinken des Stromes vom Maximalwert 46 nach einer Exponential-Funktion erfolgt.

Gleichzeitig beim Berühren des Schweißdrahtes 14 mit dem Werkstück 17, also im Kurzschlußfall zum Zeitpunkt 44, beginnt auch der Strom in der Konstant-Stromquelle 3, insbesondere vom Leistungsteil 4, zu steigen, d.h., daß zum Zeitpunkt 44 sowohl ein Stromanstieg von der Konstant-Spannungsquelle 32 und von der Konstant-Stromquelle 3 geschaffen wird. Da jedoch aufgrund der hohen Leerlaufspannung ein rascherer Stromanstieg von der Konstant-Spannungsquelle 32 erzielt wird, erfolgt die Zündung und Versorgung des Lichtbogens 16 mit Energie im ersten Moment von der Konstant-Spannungsquelle 32.

Aufgrund des Absinkens des Stromes von der Konstant-Spannungsquelle 32 nach Erreichen des Maximalwertes 46 und dem gleichzeitigen Ansteigen des Stromes von der Konstant-Stromquelle 3 wird zu einem Zeitpunkt 48 der Strom von der Konstant-Stromquelle 3 größer als der der Konstant-Spannungsquelle 32. Dies ist deshalb möglich, da der Benutzer beim Aktivieren bzw. für den Schweißprozeß einen entsprechenden Stromwert einstellt, sodaß aufgrund des Kurzschlusses zum Zeitpunkt 44 die Konstant-Stromquelle 3 den Schweißdraht 14 mit dem voreingestellten Stromwert versorgen möchte, sodaß aufgrund des Absinkens des Stromes von der Konstant-Spannungsquelle 32 und dem Stromanstieg von der Konstant-Stromquelle 3, beispielsweise ab dem Zeitpunkt 47, eine Versorgung des Schweißdrahtes 14 über die Konstant-Stromquelle 3 geschaffen wird. Der Strom der Konstant-Stromquelle 3 steigt solange, bis dieser einen voreingestellten Stromwert 49 erreicht, wie dies zu einem Zeitpunkt 50 der Fall ist. Anschließend wird nach Erreichen des Stromwertes 49 dieser von der Konstant-Stromquelle 3 konstant gehalten. Die Zeitdauer, insbesondere die Stromanstieggeschwindigkeit bis zum Erreichen des Stromwertes 49 ist abhängig von der Leerlaufspannung der Konstant-Stromquelle 3 sowie einer Lichtbogenspannung 51 und der Schweißkreisinduktivität.

Gleichzeitig mit dem Erreichen des eingestellten Stromwertes 49 wird von der Steuervorrichtung 5 die Lichtbogenspannung 51 erfaßt. Die Steuervorrichtung 5 speichert den ermittelten Wert in einem Speicher ab. Daraufhin wird von der Steuervorrichtung 5 ein im Speicher hinterlegter Soll-Wert zu der ermittelten Lichtbogenspannung 51 hinzuaddiert, wodurch ein Referenzwert 52 von der Steuervorrichtung 5 bestimmt wird. Durch das Versorgen des Schweißdrahtes 14 mit dem voreingestellten Stromwert 49 wird das Drahtende weiter angeschmolzen und es steigt die Spannung und die Lichtbogenlänge am Schweißdraht 14 weiter an. Die Steuervorrichtung 5 vergleicht den ermittelten Referenzwert 52 mit der am Schweißdraht 14 anliegenden Lichtbogenspannung 51.

Die Versorgung des Schweißdrahtes 14 mit dem voreingestellten Stromwert 49 wird von der Konstant-Stromquelle 3 solange aufrechterhalten, bis die Lichtbogenspannung 51 am Schweißdraht 14 über dem voreingestellten Referenzwert 52 liegt. Dabei ist es möglich, daß beim Überschreiten der Lichtbogenspannung 51 über den Referenzwert 52 von der Steuervorrichtung 5 ein Zeitglied gestartet wird, sodaß nach Ablauf einer voreinstellbaren Zeitdauer 53 ein neuer Steuervorgang durchgeführt wird.

Aus dem Diagramm ist ersichtlich, daß zu einem Zeitpunkt 54 die Spannung am Schweißdraht 14, insbesondere die Lichtbogenspannung 51, über den ermittelten Referenzwert 52 steigt, d.h., daß zum Zeitpunkt 54 von der Steuervorrichtung 5 das Zeitglied aktiviert wird, sodaß nach Ablauf der voreingestellten Zeitdauer 53, also zu einem Zeitpunkt 55, von der Steuervorrichtung 5 das Leistungsteil 4 derartig ausgesteuert wird, daß der Strom auf einen voreinstellbaren Minimalwert 56 abgesenkt wird, wie dies ab dem Zeitpunkt 55 ersichtlich ist. Gleichzeitig mit dem Absenken des Stromes auf den Minimalwert 56 beginnt auch die Spannung am Schweißgerät 1, aufgrund des kürzer werdenden Lichtbogens 16, zu sinken. Von der Steuervorrichtung 5 wird nunmehr der Spannungswert, insbesondere die Lichtbogenspannung 51, überwacht, sodaß durch einen laufenden Vergleich zwischen dem Ist-Wert und einem voreingestellten Minimalwert 57 die Steuervorrichtung 5 erkennen kann, daß die Spannung, insbesondere die Lichtbogenspannung 51, den Minimalwert 57 erreicht hat. Selbstverständlich ist es möglich, daß das Einleiten des Absenkens des Stromes auf den Minimalwert 56 direkt nach dem Erreichen des Referenzwertes 52 möglich ist.

Nachdem die Spannung soweit abgesunken ist, daß sie mit dem Minimalwert 57 übereinstimmt bzw. unterhalb des Minimalwertes 57 liegt, ist der Zündprozeß zum Zünden des Lichtbogens 16 mit einer Stabilisierungsphase abgeschlossen, d.h., daß nunmehr der tatsächliche Schweißprozeß durchgeführt werden kann, wie dies ab einem Zeitpunkt 58 ersichtlich ist, d.h., daß beispielsweise bei einem Pulsschweißverfahren ab dem Zeitpunkt 58 von der Steuervorrichtung 5 der Pulsgenerator gestartet wird, wie dies durch Schweißimpulse 59, 60 in den Fig. 4 und 5 dargestellt ist. Auf die exakte Abwicklung der nachfolgenden Schweißprozesse wird nicht näher eingegangen, da nach dem Zündverfahren, welches zum Zeitpunkt 58 abgeschlossen ist, jedes beliebige zum Stand der Technik zählende Schweißverfahren durchgeführt werden kann.

Der Vorteil bei einem derartigen Zündprozeß liegt darin, daß aufgrund der hohen Leerlaufspannung, die nur kurzzeitig über die zusätzliche Konstant-Spannungsquelle 32 an den Schweißdraht 14 angelegt wird, ein sehr rascher und steiler Stromanstieg am Schweißdraht 14 erreicht wird, sodaß eine sichere Zündung des Lichtbogens 16 erreicht wird. Weiters wird durch den steilen Stromanstieg verhindert, daß zwischen dem Schweißdraht 14 und dem Werkstück 17 ein satter Kurzschluß entsteht, wodurch Schweißspritzer sowie eventuell entstehende Bindefehler vermieden werden können. Darüber hinaus liegt die hohe Leerlaufspannung nicht vor dem Berühren des Schweißdrahtes 14 mit dem Werkstück 17 an den Schweißbuchsen an.

Die Problematik bei einem zum Stand der Technik zählenden Verfahren liegt darin, daß es öfter zu sogenannten satten Kurzschlüssen kommen kann, bei denen der normale Stromimpuls bzw. Stromwert 49 nicht mehr ausreicht, um den Lichtbogen 16 zu zünden bzw. zu erzeugen. Dieser satte Kurzschluß kann nur mehr durch eine entsprechende Stromerhöhung bzw. andauernde Stromlieferung zum Schweißdraht 14 aufgelöst werden, wodurch der Schweißdraht 14 an einer undefinierten Stelle, die meist direkt am Kontaktrohr des Schweißbrenners 11 liegt, durchschmolzen wird. Infolge wird ein kurzes Stück des Schweißdrahtes 14 weggeschleudert, sodaß der Lichtbogen 16 vom Kontaktrohr des Schweißbrenners 11 zum Werkstück 17 gezündet wird bzw. daß bei zu großem Abstand kein Lichtbogen 16 gezündet werden kann. Durch die Ausbildung eines satten Kurzschlusses entstehen große Mengen an Schweißspritzern bzw. an Einbränden, die durch die hohen Stromimpulse zur Auflösung des satten Kurzschlusses erzeugt werden.

Bei dem erfindungsgemäßen Zündverfahren werden die satten Kurzschlüsse bei der Berührung des Schweißdrahtes 14 mit dem Werkstück 17 dadurch verhindert, daß der Stromanstieg zum Zündzeitpunkt des Lichtbogens 16, also zwischen den Zeitpunkten 44 und 47, sehr steil gemacht wird, wobei der Maximalwert 46 des Stromes begrenzt ist. Dazu wird der Konstant-Stromquelle 3, insbesondere des Leistungsteils 4, eine weitere Energiequelle, insbesondere die Konstant-Spannungsquelle 32, mit sehr hoher Leerlaufspannung und begrenztem Kurzschlußstrom parallel geschaltet.

Die parallel geschaltete Konstant-Spannungsquelle 32 weist dabei einen sehr kleinen Innenwiderstand auf. Dabei ist es möglich, daß die Konstant-Spannungsquelle 32 nur zeitlich begrenzte Energie liefert. Diese Eigenschaften für die Konstant-Spannungsquelle 32 können z.B. durch einen Kondensator 36 mit einer bestimmten Kapazität, der auf eine bestimmte Spannung, insbesondere auf die Leerlaufspannung, aufgeladen wird, erreicht werden. Damit eine vorgegebene Stromanstiegsgeschwindigkeit erreicht wird, muß bei gegebener Schweißkreisinduktivität L die dazu notwendige Höhe der Leerlaufspannung UL nach der allgemein bekannten Formel UL = L * di/dt errechnet werden. Dabei ist es beispielsweise möglich, daß der Benutzer eine entsprechende Stromanstiegsgeschwindigkeit auswählt, worauf die Steuervorrichtung 5 die entsprechende Leerlaufspannung errechnet und die Konstant-Spannungsquelle 32 auf eine entsprechende Leerlaufspannung auflädt. Damit der Kurzschlußstrom von der Konstant-Spannungsquelle 32 begrenzt werden kann, ist es möglich, daß der Widerstand des Schweißkreises verändert wird. Dies kann insofern erfolgen, indem von der Steuervorrichtung 5 ein entsprechender Widerstand in die Versorgungsleitung 18 dazugeschaltet wird.

Selbstverständlich ist es möglich, daß zur Begrenzung des Kurzschlußstromes von der Konstant-Spannungsquelle 32, wenn diese z.B. durch einen Kondensator 36 gebildet wird, die Kapazität verändert werden kann. Dies kann z.B. automatisch über die Steuervorrichtung 5 erfolgen.

Weiters kann anstelle der in Fig. 3 gezeigten, bevorzugt konstanten Vorschubgeschwindigkeit der abzuschmelzenden Elektrode die Vorschubgeschwindigkeit in Abhängigkeit der Schweißparameter bzw. in Abhängigkeit der gewünschten Schweißnaht während des Schweiß- oder auch Zündprozesses verändert werden.

Das zuvor beschriebene Verfahren wird hauptsächlich aufgrund der sicherheitstechnischen Probleme der hohen Leerlaufspannung bei automatisierten Schweißungen, wie sie bei Schweißrobotern durchgeführt werden, eingesetzt, da bei den automatisierten Schweißungen entsprechende Vorkehrungen durchgeführt werden können.

Fig. 6 zeigt ein anderes Ausführungsbeispiel der Schweißstromquelle 2 mit der Konstant-Stromquelle 3 und der Konstant-Spannungsquelle 32, wobei hierbei die Konstant-Spannungsquelle 32 vom Ausgang der Konstant-Stromquelle 3 gespeist wird.

Es wird also die Konstant-Stromquelle 3 gleichzeitig dazu verwendet, um die Konstant-Spannungsquelle 32, die beispielsweise wiederum durch den Kondensator 36 gebildet ist, aufzuladen. Eine Serienschaltung des Kondensators 36 mit der Diode 38 und dem elektronischen Schalter 39 ist dabei derart mit dem Ausgang der Konstant-Stromquelle 3 bzw. mit den Versorgungsleitungen 18, 26 verbunden, daß die Kathode der Diode 38 mit dem positiven Potential, demgemäß mit der Versorgungsleitung 18, verbunden ist und der verbleibende Anschluß des Kondensators 36 mit dem negativen Potential, beispielsgemäß mit der Versorgungsleitung 26, verbunden ist. Der Serienschaltung von der Diode 38 mit dem elektronischen Schalter 39 ist ein Schalter 61 parallel geschaltet, dessen Steuereingang über eine Steuerleitung 62 mit der Konstant-Stromquelle 3 oder auch mit der Steuervorrichtung 5 verbunden ist, wodurch die Serienschaltung der Diode 38 und des Schalters 39 überbrückt werden kann.

Mittels dem Ausgang der Konstant-Stromquelle 3 wird also die Konstant-Spannungsquelle 32, insbesondere der Kondensator 36, aufgeladen. Die Diode 38 dient der Entkopplung des Schweißstromkreises während der Schweißung. Die Konstant-Stromquelle 3 ist aufgrund ihrer Auslegung bzw. ihres Leistungsteilkonzeptes in der Lage, nach dem Startbefehl eine entsprechend hohe Leerlaufspannung zu liefern, sodaß über den von der Konstant-Stromquelle 3 oder auch von der Steuervorrichtung 5 gesteuerten, in der Startphase leitenden Schalter 61 der Kondensator 36 auf eine entsprechend hohe Spannung von beispielsweise 200 V aufgeladen wird. Nachdem der bevorzugt voreinstellbare Spannungswert am Kondensator 36 erreicht ist, wird der Schalter 61 geöffnet bzw. in den Sperrzustand versetzt und die Leerlaufspannung der Konstant-Stromquelle 3 auf einen den Sicherheitsvorschriften entsprechenden Wert abgesenkt und nachfolgend das Drahtvorschubgerät 12 aktiviert. Tritt innerhalb einer bestimmten, voreinstellbaren, relativ kurzen Zeitspanne nach dem Start der Konstant-Stromquelle 3 keine Berührung des dem Werkstück 17 zugeordneten Endes des Schweißdraht 14 mit dem Werkstück 17 auf, so wird beispielsweise der Schalter 61 abermals geschlossen und die Spannung des Kondensators 36 auf einen den Sicherheitsvorschriften entsprechenden Wert abgesenkt.

Berührt innerhalb der Zeitspanne das Schweißdrahtende das Werkstück 17, so wird durch die Konstant-Spannungsquelle 32 bzw. den Kondensator 36 durch Aktivieren des Schalters 39 ebenso ein steiler Stromanstieg auf den Maximalwert 46, wie in Fig. 5 beschrieben, erzielt, worauf nach Erreichen dieses Maximalwertes 46 der von der Konstant-Spannungsquelle 32, insbesondere dem Kondensator 36, abgegebene Strom absinkt und der Lichtbogen 16 durch den ansteigenden Strom von der Konstant-Stromquelle 3 aufrecht erhalten wird.

Es kann also festgehalten werden, daß die Konstant-Spannungsquelle 32, wenn diese parallel mit der Konstant-Stromquelle 3 geschaltet ist und den Schalter 61 aufweist, keine eigene Ladeschaltung besitzen muß, und in der Startphase der Konstant-Stromquelle 3 vom Ausgang der Konstant-Stromquelle 3 selbst auf einen entsprechenden hohen Spannungswert aufgeladen wird. Hierzu ist es beispielsweise möglich, daß vor den Ausgangs- bzw. den Schweißbuchsen der Konstant-Stromquelle 3 zusätzlich Schalter angeordnet werden können, sodaß während des Ladevorganges für den Kondensator 36 kein Stromkreis über die Schweißbuchsen gebildet werden kann. Gleichzeitig mit dem Aktivieren des Schalters 61 können die zusätzlich vor den Schweißbuchsen angeordneten Schalter geschlossen werden, sodaß ein Zündvorgang durchgeführt werden kann.

Selbstverständlich sind die zuvor beschriebenen, erfindungsgemäßen Verfahren bei sämtlichen aus dem Stand der Technik bekannten abschmelzenden Elektroden, also z.B. sowohl bei Drahtelektroden als auch bei Stabelektroden, welche bevorzugt mit einer Umhüllung versehen sind und auch ohne Schutzgasatmosphäre verarbeitet werden, anwendbar.

### Bezugszeichenaufstellung

- 1: Schweißgerät
- 2: Schweißstromquelle
- 3: Konstant-Stromquelle
- 4: Leistungsteil
- 5: Steuervorrichtung

- 6: Umschaltglied
- 7: Steuerventil
- 8: Versorgungsleitung
- 9: Gas
- 10: Gasspeicher

- 11: Schweißbrenner
- 12: Drahtvorschubgerät
- 13: Versorgungsleitung
- 14 Schweißdraht
- 15: Vorratstrommel

- 16: Lichtbogen
- 17: Werkstück
- 18: Versorgungsleitung
- 19: Kühlkreislauf
- 20: Strömungswächter

- 21: Wasserbehälter
- 22: Ein- und/oder Ausgabevorrichtung
- 23: Versorgungsleitung
- 24: Versorgungsleitung
- 25: Spannungsversorgungsnetz

- 26: Versorgungsleitung
- 27: Steuerleitung
- 28: Steuerleitung
- 29: Fördervorrichtung
- 30: Förderrolle

- 31: Förderrolle
- 32: Konstant-Spannungsquelle
- 33: Leitung
- 34: Leitung
- 35: Steuerleitung

- 36: Kondensator
- 37: Aufladevorrichtung
- 38: Diode
- 39: Schalter
- 40: Steuereinrichtung

- 41: Stromwandler
- 42: Zeitpunkt
- 43: Zeitpunkt
- 44: Zeitpunkt
- 45: Wert

- 46: Maximalwert
- 47: Zeitpunkt
- 48: Zeitpunkt
- 49: Stromwert
- 50: Zeitpunkt

- 51: Lichtbogenspannung
- 52: Referenzwert
- 53: Zeitdauer
- 54: Zeitpunkt
- 55: Zeitpunkt

- 56: Minimalwert
- 57: Minimalwert
- 58: Zeitpunkt
- 59: Schweißimpuls
- 60: Schweißimpuls

- 61: Schalter
- 62: Steuerleitung

## Patentansprüche

1. Verfahren zum Zünden eines Lichtbogens (16) zwischen einem Werkstück (17) und einer abzuschmelzenden Elektrode (14), bei dem die Elektrode (14) mit Energie aus zumindest einer Konstant-Stromquelle (3) versorgt wird und durch Berühren der Elektrode (14) mit dem Werkstück (17) ein Lichtbogen (16) gezündet wird, **dadurch gekennzeichnet, daß** zur Zündung des Lichtbogens (16) die Energie von einer Konstant-Spannungsquelle (32) der Energie der Konstant-Stromquelle (3) überlagert wird, wobei die Energie von der Konstant-Spannungsquelle (32) in Abhängigkeit eines voreinstellbaren Stromwertes und/oder Stromanstieges der Konstant-Stromquelle (3) zugeschaltet wird und ein steiler Stromanstieg auf einen voreinstellbaren Maximalwert bewirkt wird, worauf nach Erreichen des Maximalwertes der von der Konstant-Spannungsquelle (32) abgegebene Strom absinkt und der Lichtbogen (16) durch den ansteigenden Strom von der Konstant-Stromquelle (3) aufrecht erhalten wird.

2. Verfahren nach Anspruch 1, **dadurch gekennzeichnet, daß** nach dem Erreichen eines voreinstellbaren Stromwertes der Konstant-Stromquelle (3) von einer Steuervorrichtung (5) eine Lichtbogenspannung erfaßt und anschließend diese in einem Speicher hinterlegt wird.

3. Verfahren nach Anspruch 2, **dadurch gekennzeichnet, daß** die Höhe des Stromes, insbesondere der Stromwert der Konstant-Stromquelle (3) solange konstant gehalten wird, bis die Lichtbogenspannung einen von der Steuervorrichtung (5) festgelegten Referenzwert erreicht bzw. überschreitet, worauf der Strom auf einen voreinstellbaren Minimalwert abgesenkt wird.

4. Verfahren nach Anspruch 3, **dadurch gekennzeichnet, daß** beim Erreichen bzw. beim Unterschreiten des voreinstellbaren Minimalwertes der Lichtbogenspannung der Schweißprozeß gestartet wird.

5. Verfahren nach einem der Ansprüche 2-4, **dadurch gekennzeichnet, daß** die Messung der Lichtbogenspannung für den Referenzwert am Kontaktrohr eines Schweißbrenners (11) erfolgt.

6. Verfahren nach einem der vorhergehenden Ansprüche, **dadurch gekennzeichnet, daß** von der Konstant-Stromquelle (3) der Strom solange konstant gehalten wird, bis sich eine entsprechende Lichtbogenlänge am Schweißdraht (14) ausbildet.

7. Verfahren nach einem der Ansprüche 2 bis 6,
**dadurch gekennzeichnet, daß** die Steuervorrichtung (5) durch Erfassen der Lichtbogenspannung die Lichtbogenlänge ermittelt.

8. Verfahren nach einem der Ansprüche, **dadurch gekennzeichnet, daß** beim Aktivieren des Schweißprozesses die Drahtvorschubgeschwindigkeit in Richtung des Werkstückes (17) konstant gehalten wird.

9. Verfahren nach Anspruch 5, **dadurch gekennzeichnet, daß** der Schweißbrenner (11) ab dem Zeitpunkt, wo die Lichtbogenspannung einen Minimalwert erreicht bzw. unterschreitet, relativ zum Werkstück (17) bewegt wird.

10. Verfahren nach einem der vorhergehenden Ansprüche, **dadurch gekennzeichnet, daß** als Elektrode (14) eine Stabelektrode eingesetzt wird.

11. Verfahren nach einem der Ansprüche 2-9, **dadurch gekennzeichnet, daß** als Elektrode (14) eine Drahtelektrode eingesetzt wird.

12. Einrichtung zur Durchführung des Verfahrens nach einem der vorhergehenden Ansprüche 1 bis 11 mit einer Konstant-Stronquelle (3), einer Konstant-Spannungquelle (32) einer Steuervorrichtung (40) und einer abzuschmelzenden Elektrode (14), **dadurch gekennzeichnet, daß** die Konstant-Spannungsquelle (32) aus einem Energiespeicher, insbesondere aus einem Kondensator (36), besteht, der über eine Aufladevorrichtung (37) auf einen voreinstellbaren Spannungswert aufladbar ist.

13. Einrichtung nach Anspruch 12, **dadurch gekennzeichnet, daß** die Konstant-Spannungsquelle (32) der Konstant-Stromquelle (3) parallel geschaltet ist.

14. Einrichtung nach Anspruch 12 oder 13, **dadurch gekennzeichnet, daß** in Serie zur Konstant-Spannungsquelle (32) ein elektronischer Schalter (39) vorgesehen ist.

15. Einrichtung nach Anspruch 14, **dadurch gekennzeichnet, daß** der elektronische Schalter (39) über eine Steuereinrichtung (40) ansteuerbar ist.

16. Einrichtung nach Anspruch 15, **dadurch gekennzeichnet, daß** die Steuereinrichtung (40) über einen Signalgeber, beispielsweise einen Stromwandler (41), aktivierbar ist.

17. Einrichtung nach Anspruch 16,
**dadurch gekennzeichnet, daß** der Signalgeber, insbesondere der Stromwandler (41), im Stromkreis der Konstant-Stromquelle (3) zu einem Schweißbrenner (11) bzw. zum Werkstück (17) angeordnet ist.

18. Einrichtung nach einem der Ansprüche 14 bis 16, **dadurch gekennzeichnet, daß** zwischen dem Energiespeicher (36) und dem elektronischen Schalter (39) eine Diode (38) vorgesehen ist.

19. Einrichtung nach einem der Ansprüche 12 bis 18, **dadurch gekennzeichnet, daß** die Konstant-Spannungsquelle (32), insbesondere der Kondensator (36), in der Startphase der Konstant-Stromquelle (3) an deren Ausgang geschaltet ist und von dieser auf einen entsprechend hohen Spannungswert aufladbar ist.

20. Einrichtung nach Anspruch 18, **dadurch gekennzeichnet, daß** der Diode (38) und dem elektronischen Schalter (39) ein Schalter (61) parallel geschaltet ist, der über die Steuervorrichtung (40) der Konstant-Stromquelle (3) steuerbar ist.

## Claims

1. Method of igniting an arc (16) between a workpiece (17) and a fusible electrode (14), whereby the electrode (14) is supplied with energy from at least one constant current source (3) and is ignited by bringing the electrode (14) into contact with the workpiece (17), **characterised in that** in order to ignite the arc (16), the energy from a constant voltage source (32) is superposed on the energy from the constant current source (3) depending on a pre-settable current value and/or current rise of the constant current source (3), whereupon a steep rise in current is produced up to a pre-settable maximum value and when the maximum value is reached, the current dispensed from the constant voltage source (32) is reduced and the arc (16) maintained by the rising current from the constant current source (3).

2. Method as claimed in claim 1, **characterised in that** when a pre-settable current value of the constant current source (3) has been reached, an arc voltage is detected by a control system (5) and is then stored in a memory.

3. Method as claimed in claim 2, **characterised in that** the level of the current, in particular the current value of the constant current source (3), is kept constant until the arc voltage reaches or exceeds a reference value fixed by the control system (5), whereupon the current is reduced to a pre-settable minimum value.

4. Method as claimed in claim 3, **characterised in that** the welding process is started once the arc voltage reaches or falls below the pre-settable minimum value of the arc voltage.

5. Method as claimed in one of claims 2 to 4, **characterised in that** measurement of the arc voltage for the reference value is taken on the contact pipe of a welding torch (11).

6. Method as claimed in one of the preceding claims, **characterised in that** the current from the constant current source (3) is kept constant until a corresponding arc length is formed on the welding wire (14).

7. Method as claimed in one of claims 2 to 6, **characterised in that** the control system (5) determines the arc length by detecting the arc voltage.

8. Method as claimed in one of the preceding claims, **characterised in that** when the welding process is activated, the wire feed rate in the direction of the workpiece (17) is kept constant.

9. Method as claimed in claim 5, **characterised in that** the welding torch (11) is displaced relative to the workpiece (17) from the instant at which the arc voltage reaches or falls below a minimum value.

10. Method as claimed in one of the preceding claims, **characterised in that** the electrode (14) used is a bar electrode.

11. Method as claimed in one of claims 2 to 9, **characterised in that** the electrode (14) used is a wire electrode.

12. Device for implementing the method as claimed in one of the preceding claims 1 to 11, having a constant current source (3), a constant voltage source (32), a control system (40) and a fusible electrode (14), **characterised in that** the constant voltage source (32) consists of an energy storage, in particular a capacitor (36), which may be charged to a pre-settable voltage value by means of a charging device (37).

13. Device as claimed in claim 12, **characterised in that** the constant voltage source (32) is connected in parallel with the constant current source (3).

14. Device as claimed in claim 12 or 13, **characterised in that** an electronic switch (39) is provided in series with the constant voltage source (32).

15. Device as claimed in claim 14, **characterised in that** the electronic switch (39) may be activated by means of a control unit (40).

16. Device as claimed in claim 15, **characterised in that** the control unit (40) may be activated via a signal transmitter, for example a current transformer (41).

17. Device as claimed in claim 16, **characterised in that** the signal transmitter, in particular the current transformer (41), is arranged in the current circuit of the constant current source (3) to a welding torch (11) and the workpiece (17).

18. Device as claimed in one of claims 14 to 16, **characterised in that** a diode (38) is provided between the energy storage (36) and electronic switch (39).

19. Device as claimed in one of claims 12 to 18, **characterised in that** the constant voltage source (32), in particular the capacitor (36), is connected into the start phase of the constant current source (3), at the output thereof, and can be charged thereby to a corresponding high voltage value.

20. Device as claimed in claim 18, **characterised in that** a switch (61) is connected in parallel with the diode (38) and the electronic switch (39), which is controllable via the control device (5) of the constant current source (3).

## Revendications

1. Procédé pour amorcer un arc (16) entre une pièce (17) et une électrode fusible (14), dans lequel l'électrode (14) est alimentée en énergie provenant d'au moins une source de courant constant (3) et, par le contact de l'électrode (14) avec la pièce (17), un arc (16) est amorcé, **caractérisé en ce que** pour l'amorce de l'arc (16), l'énergie d'une source de tension constante (32) est superposée à l'énergie de la source de courant constant (3), où l'énergie de la source de tension constante (32) est mise en circuit en fonction d'une valeur de courant et/ou d'une montée de courant pouvant être réglée préalablement de la source de courant constant (3) et une montée de courant abrupte à une valeur maximale préréglable est provoquée à la suite de quoi, après l'atteinte de la valeur maximale, le courant émis par la source de tension constante (32) diminue et l'arc (16) est maintenu par le courant montant de la source de courant constant.

2. Procédé selon la revendication 1, **caractérisé en ce que**, après l'atteinte d'une valeur de courant préréglable de la source de courant constant (3), une tension d'arc est détectée par un dispositif de commande (5) et ensuite, celle-ci est stockée dans une mémoire.

3. Procédé selon la revendication 2, **caractérisé en ce que** le niveau du courant, notamment la valeur de courant de la source de courant constant (3) est maintenue constant jusqu'à ce que la tension d'arc atteint respectivement dépasse une valeur de référence fixée par le dispositif de commande (5) à la suite de quoi le courant est abaissé à une valeur minimale préréglable.

4. Procédé selon la revendication 3, **caractérisé en ce que** lors de l'atteinte respectivement du passage en dessous d'une valeur minimale préréglable de la tension d'arc, le processus de soudage est démarré.

5. Procédé selon l'une des revendications 2 à 4, **caractérisé en ce que** la mesure de la tension d'arc pour la valeur de référence a lieu au tube de contact d'un chalumeau soudeur.

6. Procédé selon l'une des revendications précédentes, **caractérisé en ce que** par la source de courant constant (3), le courant est maintenu constant aussi longtemps jusqu'à ce que soit formée une longueur d'arc correspondante au fil d'apport.

7. Procédé selon l'une des revendications 2 à 6, **caractérisé en ce que** le dispositif de commande (5) détermine la longueur d'arc par la détection de la tension d'arc.

8. Procédé selon l'une des revendications, **caractérisé en ce que** lors de l'activation du processus de soudage, la vitesse d'avance du fil en direction de la pièce (17) est maintenue constante.

9. Procédé selon la revendication 5, **caractérisé en ce que** le chalumeau (11), à partir de l'instant où la tension d'arc atteint, respectivement passe en dessous d'une valeur minimale, est déplacée relativement à la pièce (17).

10. Procédé selon l'une des revendications précédentes, **caractérisé en ce qu'**il est utilisé comme électrode (14) une électrode en baguette.

11. Procédé selon l'une des revendications 2 à 9, **caractérisé en ce qu'**il est utilisé comme électrode (14) un fil-électrode.

12. Installation pour la mise en oeuvre du procédé selon l'une des revendications précédentes 1 à 11, avec une source de courant constant (3), une source de tension constante (32), un dispositif de commande (40) et une électrode fusible (14), **caractérisée en ce que** la source de tension constante (32) est constituée d'un dispositif de stockage d'énergie, notamment d'un condensateur (36) qui peut être chargé par un dispositif de charge (37) à une valeur de tension préréglable.

13. Installation selon la revendication 12, **caractérisée en ce que** la source de tension constante (32) est montée en parallèle avec la source de courant constant (3).

14. Installation selon la revendication 12 ou 13, **caractérisée en ce qu'**il est prévu en série à la source de tension constante (32) un commutateur électronique (39).

15. Installation selon la revendication 14, **caractérisée en ce que** le commutateur électronique (39) peut être commandé par une installation de commande (40).

16. Installation selon la revendication 15, **caractérisée en ce que** l'installation de commande (40) peut être activée par un générateur de signaux, par exemple un convertisseur de courant (41).

17. Installation selon la revendication 16, **caractérisée en ce que** le générateur de signaux, notamment le convertisseur de courant (41) est disposé dans le circuit de la source de courant constant (3) à un chalumeau soudeur (11) respectivement une pièce (17).

18. Installation selon l'une des revendications 14 à 16, **caractérisée en ce qu'**il est prévu entre le dispositif de stockage d'énergie (36) et le commutateur électronique (39) une diode (38).

19. Installation selon l'une des revendications 12 à 18, **caractérisée en ce que** la source de tension constante (32), notamment le condensateur (36), est commuté dans la phase de démarrage de la source de courant constant (3) à la sortie de celle-ci et peut être chargée par celle-ci à une valeur de tension élevée correspondante.

20. Installation selon la revendication 18, **caractérisée en ce qu'**il est monté en parallèle avec la diode (38) et le commutateur électronique (39) un commutateur (61) qui peut être commandé par le dispositif de commande (5) de la source de courant constant.
